# EUROPEAN PATENT APPLICATION

(11) **EP 4 420 907 A1**
(43) Date of publication of application: **28.08.2024**
(21) Application number: 24153286.0
(22) Date of filing: 22.01.2024
(51) Int. Cl.: B60K 5/12, B62D 25/08

(54) **VEHICLE REAR STRUCTURE**

(30) Priority: 21.02.2023 JP 2023025107
(71) Applicant: Suzuki Motor Corporation, Shizuoka 432-8611 (JP)
(72) Inventor: NISHIYAMA, Yushiro, HAMAMATSU-SHI, 432-8611 (JP); FUJII, Naoto, HAMAMATSU-SHI, 432-8611 (JP)
(74) Representative: Plasseraud IP

(57) **Abstract**

[Problem to be Solved] To secure a larger space under a floor while securing rigidity in the rear of a vehicle.

[Solution] A vehicle rear structure includes side members 10, a first cross member 21 that extends in a vehicle width direction so as to connect the side members 10 on both sides and is disposed in the rear of a vehicle, and a motor unit. The front of a rear mounting bracket 30 that supports the motor unit is joined to an intermediate portion of the first cross member 21, the rear of the rear mounting bracket 30 is joined to a tail skirt inner panel 45, a first joining portion for joining the first cross member 21 and a lateral rod balancer 25 and a second joining portion for joining the first cross member 21 and the rear mounting bracket 30 are disposed next to each other in the vehicle width direction.

## Description

### [Technical Field]

The present invention relates to a vehicle rear structure.

### [Background Art]

Under a floor panel disposed in the rear of a vehicle, a space between left and right rear wheels accommodates various devices and members, and thus, requires a predetermined capacity. For example, in an electric vehicle, in a case in which a drive unit for driving rear wheels is disposed in the rear of the vehicle, supporting rigidity for the drive unit, which is a heavy object, needs to be secured while maintaining a predetermined space.

For example, in a vehicle disclosed in Patent Literature 1, a differential gear unit, a spare tire and the like are disposed in such a space. The differential gear unit is, for example, a heavy object. Thus, predetermined supporting rigidity needs to be secured to support the differential gear unit in the rear of the vehicle body. For this reason, in a structure disclosed in Patent Literature 1, the differential gear unit is supported by a mounting member attached to a high-rigidity member constituting the frame of the vehicle body.

In the structure disclosed in Patent Literature 1, a spare tire is stored in the rear of the vehicle. In other words, in the structure of this example, a space for storing the spare tire needs to be secured while securing the supporting rigidity of the differential gear unit. For this reason, in the structure disclosed in Patent Literature 1, a differential mounting member is provided at a corner including a side member and a cross member. The mounting member is attached to the differential mounting member. The differential mounting member extends to tilt inward from the side member to the cross member. Thus, the differential gear unit is supported at a position without interfering with the spare tire.

### [Citation List]

### [Patent Literature]

[Patent Literature 1] JP 4720147 B2

### [Summary of Invention]

### [Problem to be Solved by the Invention]

When receiving an impact load from the rear of the vehicle, the vehicle rear structure is desirably capable of absorbing the impact load. In the structure of the example, the cross member is provided to support the spare tire from the lower side, and a member is provided to extend toward the rear of the vehicle from a part where the mounting member is attached on the cross member. The member has the effect of increasing rigidity in the rear of the vehicle. Furthermore, even if the member is deformed when receiving an impact load of, for example, a collision from the rear, the impact load can be absorbed by the spare tire.

However, in a vehicle where a drive unit, e.g., a motor unit is disposed in a space under the floor panel, rigidity for protecting the drive unit needs to be secured in the rear of the vehicle as well as supporting rigidity for the drive unit. In a case in which the spare tire is stored in a space under the floor as in the structure of the example, as described above, an impact load can be absorbed by the spare tire. However, in the case of an electric vehicle in which a drive unit is disposed, the transmission of an impact load to the drive unit needs to be reduced. Therefore, in order to secure a larger space while securing rigidity in the rear of a vehicle, the structure of the foregoing example has room for improvement.

The present invention has been made to solve the problem. An object of the present invention is to provide a vehicle rear structure that can secure a larger space while securing rigidity in the rear of a vehicle.

### [Means for Solving the Problem]

A vehicle rear structure according to the present invention for attaining the object includes: side members that are disposed on both sides in the vehicle width direction and extend in the longitudinal direction of a vehicle; a first cross member that extends in the vehicle width direction so as to connect the side members on both sides; a motor unit disposed between the side members on both sides in the vehicle width direction; a mounting bracket attached to a vehicle body while supporting the motor unit; a tilt member that is joined to an intermediate portion of the first cross member in the vehicle width direction and tilts toward the lower side of the vehicle while extending outward in the vehicle width direction; and an inner panel that is located on the rear end of the vehicle body and extends in the vehicle width direction. In the vehicle rear structure, the mounting bracket extends in the longitudinal direction of the vehicle, the front of the mounting bracket is joined to an intermediate portion of the first cross member in the vehicle width direction, the rear of the mounting bracket is joined to the inner panel, and a first joining portion for joining the first cross member and the tilt member and a second joining portion for joining the first cross member and the mounting bracket are disposed next to each other in the vehicle width direction.

### [Advantageous Effect of Invention]

According to the present invention, a larger space can be secured while securing rigidity in the rear of a vehicle.

### [Brief Description of Drawings]

[Figure 1] Figure 1 is a bottom view illustrating a vehicle rear structure according to the present invention when viewed from the bottom of a vehicle, and schematically illustrates a motor unit.
[Figure 2] Figure 2 is a bottom view illustrating a state in which the motor unit and rear wheels or the like in Figure 1 are removed.
[Figure 3] Figure 3 is a schematic perspective view of the vehicle rear structure of Figure 2.
[Figure 4] Figure 4 is a schematic perspective view illustrating the vehicle rear structure of Figure 3 when viewed from the front and the bottom of the vehicle.
[Figure 5] Figure 5 is an enlarged perspective view illustrating a rear mounting bracket of Figure 4 and the vicinity of the rear mounting bracket.
[Figure 6] Figure 6 is a cross-sectional view taken along line A-A of Figure 5.
[Figure 7] Figure 7 is a perspective view illustrating the vehicle rear structure of Figure 4 when viewed from the rear and the upper side of the vehicle.
[Figure 8] Figure 8 is a perspective view illustrating the rear mounting bracket of Figure 5.

### [Mode for Carrying Out the Invention]

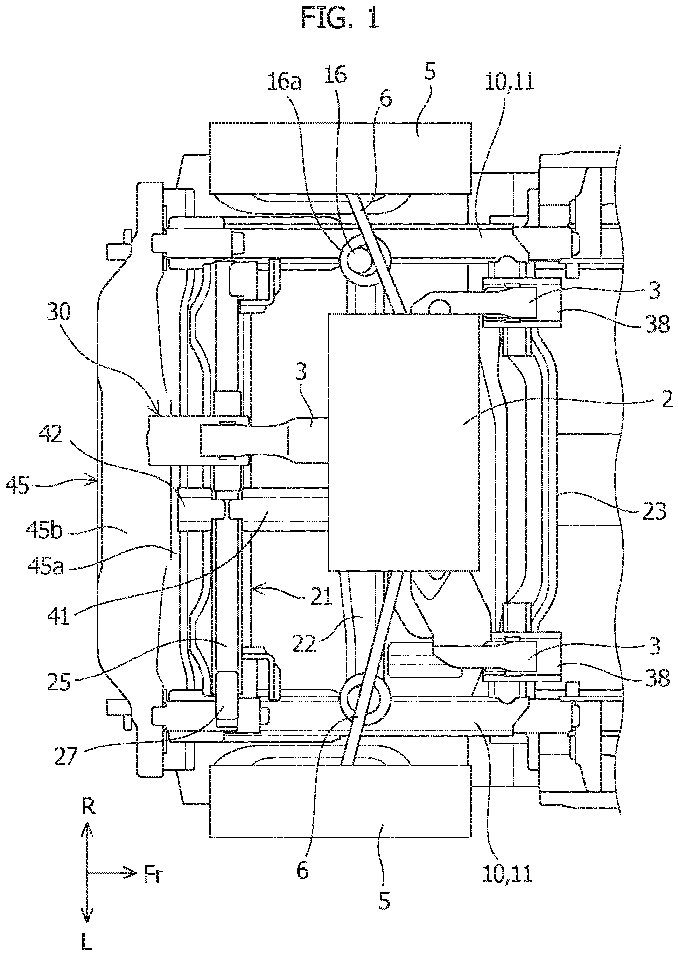

An embodiment of a vehicle rear structure according to the present invention will be described below with reference to the accompanying drawings (Figures 1 to 8). In the drawings, an arrow Fr direction indicates the front side in the longitudinal direction of a vehicle. "Front (front end) and rear (rear end)" in the description of the embodiment corresponds to the front and the rear in the longitudinal direction of the vehicle. Furthermore, an arrow R and an arrow L indicate the right side and the left side in a passenger's view ahead of the vehicle. An arrow U indicates the upper side of the vehicle.

As illustrated in Figure 1, a vehicle rear structure of the present embodiment is a structure provided below a floor panel 1 located in the rear of the vehicle and near the rear end of the floor panel 1. Furthermore, the vehicle rear structure of the present embodiment is a structure of a motor vehicle. The vehicle enables rear wheel drive in which rear wheels 5 are driven via an axle shaft 6 by a motor unit 2 (drive unit) disposed in the rear of the vehicle. In the present embodiment, the vehicle is preferable as long as the motor unit 2 is disposed in the rear of the vehicle. Thus, the vehicle may include, for example, the motor unit 2 for driving the rear wheels 5 and another motor unit for driving the front wheels.

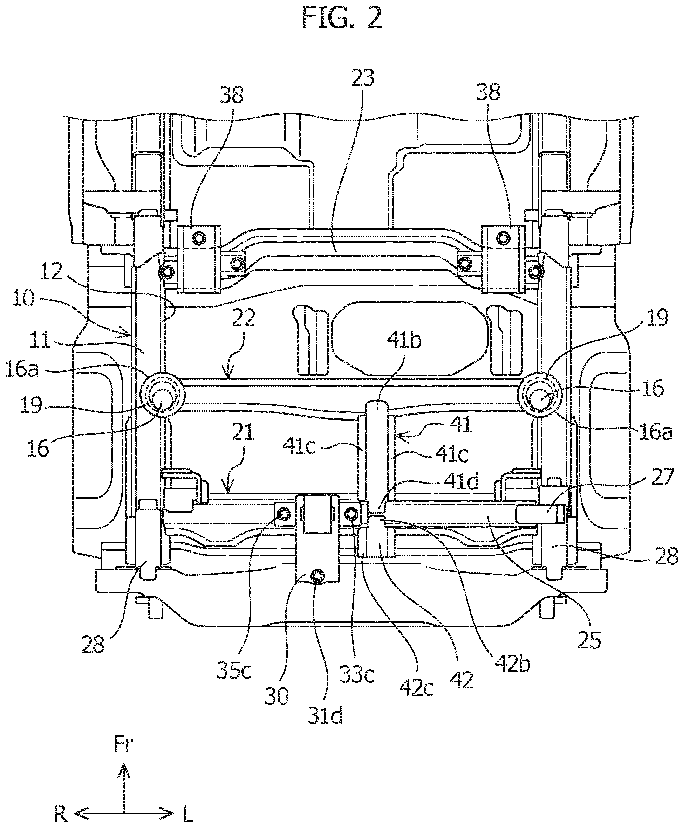

The vehicle rear structure of the present embodiment includes, as illustrated in Figure 2, side members 10, a first cross member 21, a second cross member 22, a third cross member 23, a lateral rod balancer 25 (tilt member), longitudinal reinforcing members 41 and 42, a tail skirt inner panel 45 (inner panel), and a vehicle-width-direction reinforcing member 24. The vehicle rear structure further includes the floor panel 1 located in the rear of the vehicle, the motor unit 2, front mounting brackets 38, and a rear mounting bracket 30 (mounting bracket). The members will be described below.

As illustrated in Figures 2 to 4, the side members 10 are disposed on both sides in the vehicle width direction and extend in the longitudinal direction of the vehicle. The side members 10 are high-rigidity members constituting the frame of the vehicle body and are made of a metallic material. The side members 10 are joined to an outer part in the vehicle width direction on the undersurface of the floor panel 1 in the rear of the vehicle.

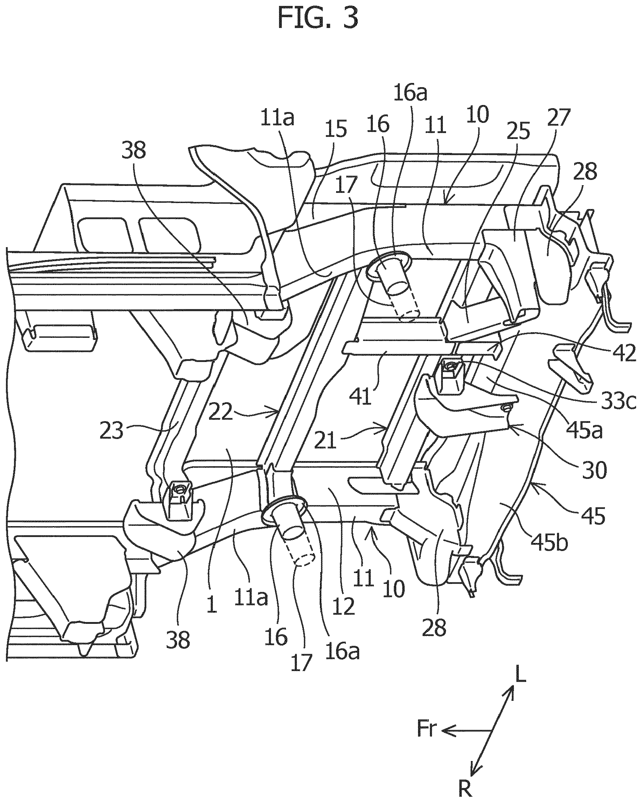

As illustrated in Figure 3, an undersurface 11 of the side member 10 of the present embodiment includes a tilting portion 11a that tilts upward toward the rear of the vehicle between a position corresponding to a joining portion with the third cross member 23, which will be described later, and a position corresponding to a joining portion with the second cross member 22. The undersurface 11 between the second cross member 22 and the first cross member 21 faces downward in the vehicle and extends in the longitudinal direction of the vehicle. The upper end of the side member 10 corresponds to, for example, the tilting shape of the undersurface 11. Furthermore, a reinforcing member 15 is disposed between the upper part of the side member 10 where the tilting portion 11a is located and the undersurface of the floor panel 1.

As illustrated in Figures 2, in the vehicle rear structure of the present embodiment, the first cross member 21, the second cross member 22, and the third cross member 23 are spaced in the longitudinal direction of the vehicle. The first cross member 21, the second cross member 22, and the third cross member 23 are, like the side members 10, high-rigidity members that constitute the frame of the vehicle body and are made of a metallic material. In this example, the first cross member 21 is disposed at a rearmost position, the second cross member 22 is disposed in front of the first cross member 21 in the vehicle, and the third cross member 23 is disposed in front of the second cross member 22 in the vehicle.

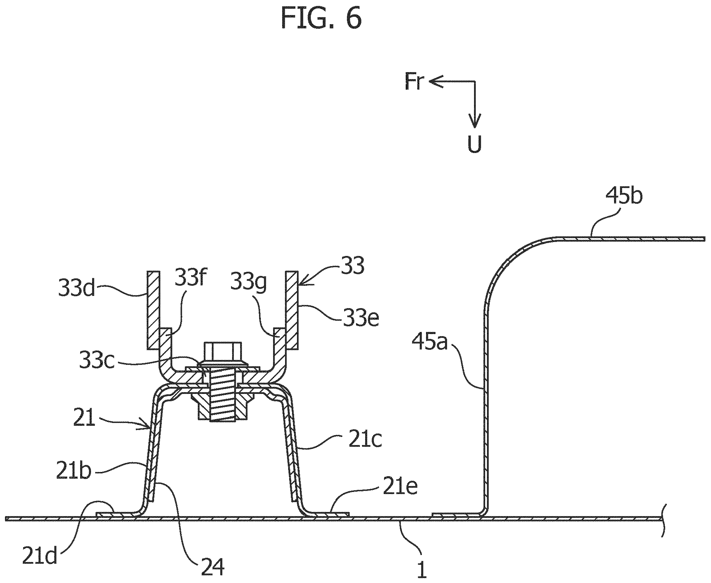

The first cross member 21 will be first described below. As illustrated in Figures 2 to 4, the first cross member 21 is a member that extends in the vehicle width direction so as to connect the side members 10 on both sides. The first cross member 21 is joined to the rear end of the floor panel 1 and is joined to inner surfaces 12 of the side members 10. The first cross member 21 of this example is shaped like a hat toward the upper side of the vehicle in cross section (Figure 6). The first cross member 21 includes an undersurface part 21a, a front wall part 21b, a rear wall part 21c, a front flange 21d, a rear flange 21e, and an outer lateral flange 21f. The undersurface part 21a is located at the lower part of the first cross member 21, has a flat surface facing downward in the vehicle, and is substantially shaped like a rectangle extending in the vehicle width direction. The front wall part 21b extends toward the top of the vehicle from the front end of the undersurface part 21a and reaches the floor panel 1. The rear wall part 21c extends from the rear end of the undersurface part 21a to the floor panel 1 like the front wall part 21b.

The front flange 21d protrudes toward the front of the vehicle from the upper end of the front wall part 21b and extends in the vehicle width direction. The front flange 21d is joined to the undersurface of the floor panel 1 by spotwelding. The rear flange 21e protrudes toward the rear of the vehicle from the upper end of the rear wall part 21c and extends in the vehicle width direction. The rear flange 21e is joined to the undersurface of the floor panel 1 by spotwelding like the front flange 21d. The outer lateral flange 21f protrudes toward the lower side of the vehicle from the outer end of the undersurface part 21a in the vehicle width direction. The outer lateral flange 21f is joined to the inner surface 12 of the side member 10 by spotwelding.

As illustrated in Figure 2, like the first cross member 21, the second cross member 22 is a member that extends in the vehicle width direction so as to connect the side members 10 on both sides. The second cross member 22 is disposed at a distance from the first cross member 21 on the vehicle front side. The second cross member 22 includes an undersurface part 22a, a front wall part 22b, a rear wall part 22c, a front flange 22d, and a rear flange 22e like the first cross member 21. The undersurface part 22a is formed like the undersurface part 21a of the first cross member 21. The length of the undersurface part 22a in the longitudinal direction of the vehicle is set slightly longer in an intermediate portion in the vehicle width direction than an outer portion in the vehicle width direction. In this example, a portion for joining the front of the first longitudinal reinforcing member 41, which will be described later, is set to be longest in the longitudinal direction of the vehicle. The front wall part 22b extends toward the top of the vehicle from the front end of the undersurface part 22a and reaches the floor panel 1. The rear wall part 22c extends from the rear end of the undersurface part 22a to the floor panel 1 like the front wall part 22b. The first longitudinal reinforcing member 41 and the like will be described later.

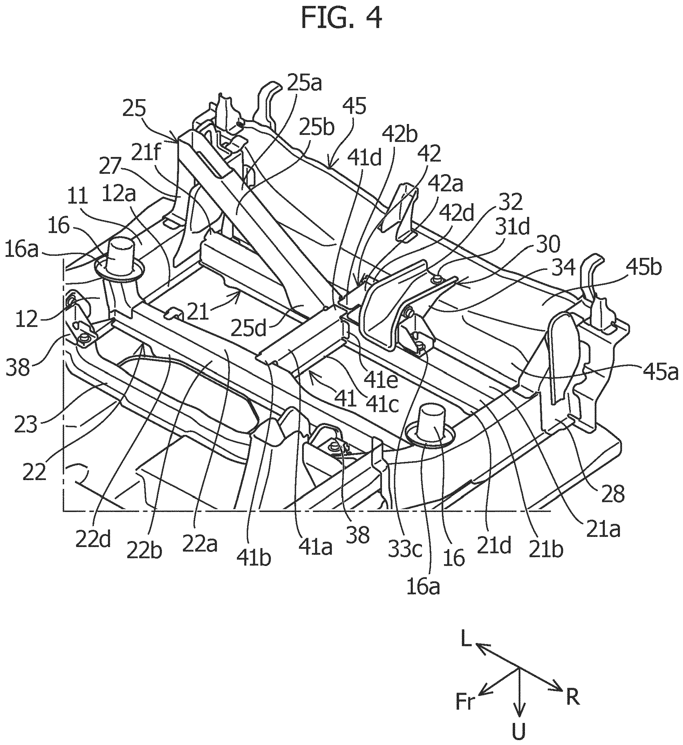

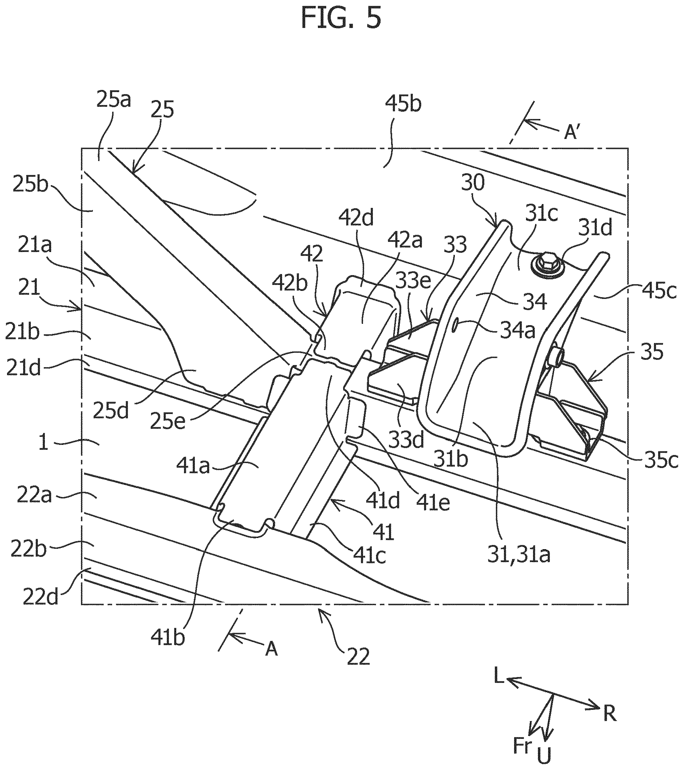

As illustrated in Figures 4 and 5, like the front flange 21d of the first cross member 21, the front flange 22d of the second cross member 22 protrudes toward the front of the vehicle from the upper end of the front wall part 22b, extends in the vehicle width direction, and is joined to the undersurface of the floor panel 1 by spotwelding. Like the front flange 22d, the rear flange 22e protrudes toward the rear of the vehicle from the upper end of the rear wall part 22c, extends in the vehicle width direction, and is joined to the undersurface of the floor panel 1 by spotwelding. The second cross member 22 may be provided with an outer lateral flange, which is not illustrated, like the first cross member 21.

As illustrated in Figure 2, like the first cross member 21 and the second cross member 22, the third cross member 23 is a member that extends in the vehicle width direction so as to connect the side members 10 on both sides. The third cross member 23 is disposed at a distance from the second cross member 22 on the vehicle front side. Like the first cross member 21 and the second cross member 22, the third cross member 23 is joined to the floor panel 1 and the side members 10.

The lateral rod balancer 25 will be described below. As illustrated in Figures 2 to 4, the lateral rod balancer 25 is a member that is joined to an intermediate portion of the first cross member 21 in the vehicle width direction and tilts toward the lower side of the vehicle while extending outward in the vehicle width direction. The lateral rod balancer 25 is a high-rigidity member made of a metallic material. A lateral rod, which is not illustrated, is connected to the outer part of the lateral rod balancer 25 in the vehicle width direction.

As illustrated in Figures 4 and 5, the lateral rod balancer 25 includes an undersurface part 25a, a front wall part 25b, and a rear wall part 25c. The undersurface part 25a has a tilted surface that tilts toward the lower side of the vehicle while extending outward in the vehicle width direction from an intermediate portion on the undersurface part 21a of the first cross member 21 in the vehicle width direction. The front wall part 25b protrudes toward the top of the vehicle from the front end of the undersurface part 25a, and the upper end of the front wall part 25b extends while tilting along the direction of tilt of the undersurface part 25a. The rear wall part 25c extends from the rear end of the undersurface part 25a while tilting like the front wall part 25b.

As illustrated in Figures 5, the lateral rod balancer 25 further includes a front flange 25d and an inside lateral flange 25e. The front flange 25d is disposed in the upper part of the front wall part 25b and is joined to the front of the first cross member 21 by spotwelding. The inside lateral flange 25e protrudes inward in the vehicle width direction from the inner end of the undersurface part 25a in the vehicle width direction and is joined to the undersurface part 21a of the first cross member 21 by spotwelding. A rear flange, which is not illustrated, may be provided in the upper part of the rear surface of the lateral rod balancer 25 such that the rear flange is joined to the rear surface of the first cross member 21.

In the present embodiment, a joining portion (first joining portion) between the lateral rod balancer 25 and the first cross member 21 includes the front flange 25d and the inside lateral flange 25e and the like of the lateral rod balancer 25 and an intermediate portion of the undersurface part 21a of the first cross member 21 in the vehicle width direction.

As illustrated in Figures 3 and 4, the rear of the left side member 10 in the vehicle width direction is provided with a brace 27 extending in the vertical direction of the vehicle. The upper portion of the brace 27 is joined to the rear end of the side member 10 by spotwelding. The outer part of the lateral rod balancer 25 in the vehicle width direction is joined to the lower part of the brace 27 by spotwelding. In this example, the lateral rod balancer 25, the first cross member 21, and the brace 27 substantially form a right triangle.

As illustrated in Figures 4 to 6, the tail skirt inner panel 45 is a panel that is located on the rear end of the vehicle body and extends in the vehicle width direction. In this example, the tail skirt inner panel 45 is joined to the rear end of the undersurface of the floor panel 1. The tail skirt inner panel 45 includes a vertical wall part 45a and a bottom part 45b. The vertical wall part 45a has a front surface and a rear surface that face the front and the rear of the vehicle and extends in the vehicle width direction. An outer part on the front surface of the vertical wall part 45a in the vehicle width direction is joined to the rear ends of the side members 10 via vertical members 28 or the like. The upper end of the vertical wall part 45a is provided with a flange that protrudes toward the front of the vehicle and extends in the vehicle width direction. The flange is joined to a rear end on the undersurface of the floor panel 1 by spotwelding.

The bottom part 45b extends from the lower end of the vertical wall part toward the rear of the vehicle and extends in the vehicle width direction. An intermediate portion on the bottom part 45b in the vehicle width direction is provided with a joining surface portion 45c where the rear mounting bracket 30 is joined. The joining surface portion 45c has a flat surface extending in the longitudinal direction of the vehicle. The joining of the joining surface portion 45c and the rear mounting bracket 30 will be described later.

The mounting bracket is attached to the vehicle body while supporting the motor unit 2. The layout of the motor unit 2 will be described below. As illustrated in Figure 1, the motor unit 2 of the present embodiment is supported by three mounting brackets attached to the vehicle body.

In this example, the motor unit 2 of this example is supported by the left and right front mounting brackets 38 and the rear mounting bracket 30. Mounting bushes (not illustrated) are attached to the left and right front mounting brackets 38 and the rear mounting bracket 30. The mounting bush is provided on one end of a support arm 3 for supporting the motor unit 2. In the mounting bush, for example, a cylindrical elastic member made of a resin material or the like is provided to reduce transmission of vibrations of the motor unit 2 to the vehicle body.

As illustrated in Figures 1 and 2, the left and right front mounting brackets 38 are disposed on the outer parts of the third cross member 23 in the vehicle width direction and are joined to the third cross member 23 and the side members 10. The rear mounting bracket 30 is attached to an intermediate portion of the first cross member 21 in the vehicle width direction and supports the rear of the motor unit 2. In this example, the rear mounting bracket 30 is disposed between the left and right front mounting brackets 38 in the vehicle width direction, and the rear mounting bracket 30 and the left and right front mounting brackets 38 are disposed to form a triangle.

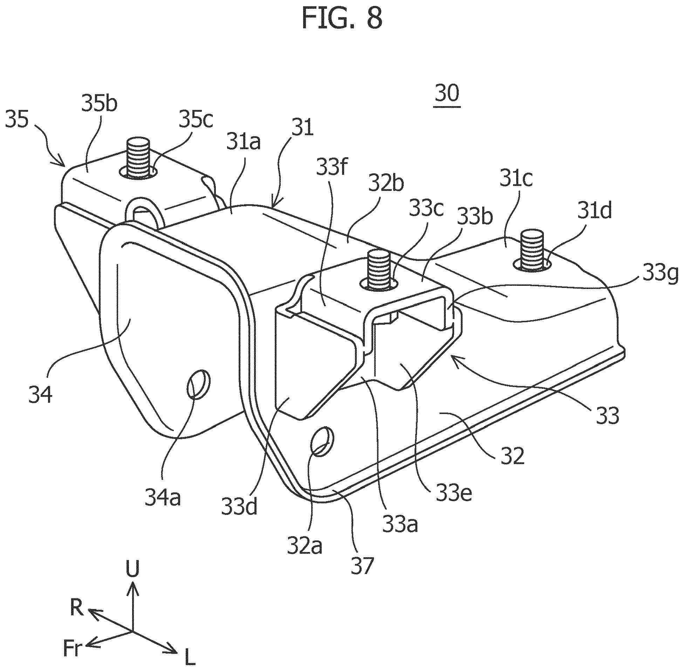

The detail of the rear mounting bracket 30 will be described below. The rear mounting bracket 30 is disposed on the rear end in the lower part of the vehicle body. As illustrated in Figure 8, the rear mounting bracket 30 includes a top surface part 31, a left side wall part 32, a right side wall part 34, a left protruding part 33, and a right protruding part 35.

The top surface part 31 extends in the longitudinal direction of the vehicle and includes a square upper face 31a, a tilted surface 31b that is tilted towards the lower side of the vehicle from the rear end of the upper face 31a to the rear of the vehicle, and a square lower face 31c extending from the lower end of the tilted surface 31b to the rear of the vehicle. The lower face 31c of the top surface part 31 is provided with a central joining portion 31d that is joined to the vehicle body. The central joining portion 31d has a circular through hole that penetrates in the vertical direction of the vehicle so as to allow the insertion of a fastening member, e.g., a bolt.

In the present embodiment, the central joining portion 31d is joined to the joining surface portion 45c of the tail skirt inner panel 45. In this example, a through hole is formed on the joining surface portion 45c. A bolt is inserted to fasten the central joining portion 31d and the joining surface portion 45c while the through hole of the central joining portion 31d and the through hole of the joining surface portion 45c communicate with each other.

The left side wall part 32 is a wall part that extends from the left end of the top surface part 31 in the vehicle width direction toward the lower side of the vehicle. The upper end of the left side wall part 32 extends along the shape of the top surface part 31, and the lower end of the left side wall part 32 extends in the longitudinal direction of the vehicle. The front end of the left side wall part 32 extends toward the lower side of the vehicle from the front end of the top surface part 31 and tilts toward the rear of the vehicle as extending from a predetermined position (an intermediate portion in the vertical direction of the vehicle) toward the lower side of the vehicle. The rear end of the left side wall part 32 extends in the vertical direction of the vehicle. The lower part of the front of the left side wall part 32 has a circular through hole 32a penetrating in the vehicle width direction. The through hole 32a is formed to allow the insertion of the shaft portion of the cylindrical mounting bush.

The right side wall part 34 is a wall part that extends from the right end of the top surface part 31 toward the lower side of the vehicle in the vehicle width direction and has the same shape as the left side wall part 32. The lower part of the right side wall part 34 has a circular through hole 34a penetrating in the vehicle width direction. The through hole 34a is formed to allow the insertion of the shaft portion of the cylindrical mounting bush. The through hole 34a of the right side wall part 34 and the through hole 32a of the left side wall part 32 are coaxially formed in the vehicle width direction. In the present embodiment, the top surface part 31, the left side wall part 32, and the right side wall part 34 are integrally formed in a U-shape when viewed in the longitudinal direction of the vehicle with the rear mounting bracket 30 attached to the vehicle body. In the U-shape formed by the top surface part 31, the left side wall part 32, and the right side wall part 34, the cylindrical mounting bush is disposed.

Furthermore, a continuous rib 37 is provided on the lower portion and the front end portion of the left side wall part 32, the front end portion of the top surface part 31, and the lower portion and the front end portion of the right side wall part 34. Thus, the rigidity of the rear mounting bracket 30 is improved.

As illustrated in Figure 8, the left protruding part 33 is a part protruding inward in the vehicle width direction from the upper portion of the left side wall part 32. The left protruding part 33 of the present embodiment is configured as a different member from the top surface part 31 or the like. The left protruding part 33 has a joining surface portion 33a, a flat surface portion 33b, a front wall 33d, and a rear wall 33e. The joining surface portion 33a of the left protruding part 33 is a substantially rectangular plate that is joined to the left side wall part 32 by arc welding. The flat surface portion 33b is a flat portion that protrudes inward from the upper end of the joining surface portion 33a in the vehicle width direction. Furthermore, the flat surface portion 33b is disposed along the top surface part 31 in the vehicle width direction. Furthermore, the flat surface portion 33b is provided with a left joining portion 33c joined to the vehicle body. The left joining portion 33c has a circular through hole that penetrates in the vertical direction of the vehicle so as to allow the insertion of a fastening member, e.g., a bolt.

The front wall 33d of the left protruding part 33 is a portion connected to a flange 33f, which is provided at the front of the undersurface of the flat surface portion 33b, and the front of the joining surface portion 33a. The front wall 33d is substantially shaped like a right triangle when viewed in the longitudinal direction of the vehicle. The rear wall 33e of the left protruding part 33 is a portion connected to a flange 33g, which is provided at the rear of the undersurface of the flat surface portion 33b, and the rear of the joining surface portion 33a. The rear wall 33e has the same shape as the front wall 33d. The front wall 33d and the rear wall 33e are connected to the front and rear of the joining surface portion 33a and are joined to the flanges 33f and 33g at the front and rear of the flat surface portion 33b by arc welding.

As illustrated in Figure 8, the right protruding part 35 is symmetrically formed with respect to the left protruding part 33. A right joining portion 35c to be joined to the vehicle body is provided on a flat surface portion 35b of the right protruding part 35. The position of the right joining portion 35c in the vertical direction of the vehicle is set at substantially the same position as the left joining portion 33c in the vertical direction of the vehicle.

The left joining portion 33c of the left protruding part 33 and the right joining portion 35c of the right protruding part 35 are joined to the undersurface part 21a of the first cross member 21. Two through holes are formed on the undersurface part 21a of the first cross member 21. The two through holes are spaced in the vehicle width direction. The left through hole in the vehicle width direction is disposed to communicate with the through hole of the left joining portion 33c. A bolt is inserted into the communicating through holes, so that the left joining portion 33c is fastened to the undersurface part 21a of the first cross member 21. Likewise, the through hole of the right joining portion 35c communicates with the right through hole. A bolt is inserted into the through holes, so that the right joining portion 35c is fastened to the undersurface part 21a of the first cross member 21.

In the present embodiment, a joining portion (second joining portion) between the rear mounting bracket 30 and the first cross member 21 includes the left joining portion 33c and the right joining portion 35c and an intermediate portion of the undersurface part 21a of the first cross member 21 in the vehicle width direction.

In the present embodiment, as illustrated in Figure 2, the first joining portion for joining the first cross member 21 and the lateral rod balancer 25 (tilt member) and the second joining portion for joining the first cross member 21 and the rear mounting bracket 30 are disposed next to each other in the vehicle width direction. Between the first joining portion and the second joining portion in the vehicle width direction, the center of the first cross member 21 in the vehicle width direction is preferably disposed.

As described above, the first joining portion and the second joining portion are disposed and the rear of the rear mounting bracket 30 extending in the longitudinal direction of the vehicle is joined to the tail skirt inner panel 45, thereby improving the rigidity of the rear of the vehicle. The structure is configured such that the first cross member 21, to which the lateral rod balancer 25 for regulating a movement of the motor unit 2 in the vehicle width direction is joined, and the tail skirt inner panel 45 are joined by the rear mounting bracket 30 extending in the longitudinal direction of the vehicle, so that the structure can be obtained with higher rigidity and strength against a collision from the rear. Furthermore, the rib 37 is provided on the rear mounting bracket 30 as described above, thereby improving rigidity in the rear of the vehicle in the longitudinal direction of the vehicle.

The rear mounting bracket 30 is a member for supporting the motor unit 2 and has high rigidity. By connecting the first cross member 21 and the tail skirt inner panel 45 via the rear mounting bracket 30 having high rigidity, rigidity in the rear of the vehicle can be improved and an increase in the number of components for improving rigidity can be reduced without additionally providing rigid members. Since an increase in the number of components can be avoided, reduction of space under the floor panel 1 can also be avoided, thereby securing a larger space. Furthermore, the structure can be obtained with strength against a collision from the rear, thereby reducing the transmission of an impact load to the motor unit 2 by a collision from the rear in a case in which the motor unit 2 is disposed in the rear of the vehicle.

In the present embodiment, the side member 10 is provided with a bump stopper attachment portion 16. The bump stopper attachment portion 16 is shaped like a cylinder extending from the undersurface 11 of the side member 10 toward the lower side of the vehicle. In this example, the bump stopper attachment portion 16 slightly tilts toward the rear of the vehicle as it extends toward the lower side of the vehicle. A seating portion 16a, on which a suspension coil 19 is disposed, is radially provided outside the upper end of the bump stopper attachment portion 16. In the present embodiment, the upper portion of the coiled suspension coil 19 is in contact with the seating portion 16a. In Figure 2, the position of the suspension coil 19 is roughly indicated by a broken line. The suspension coil 19 is an elastic member connected to a suspension structure, which is not illustrated. The suspension coil 19 is a coil spring in this example.

A bump stopper 17 is a member attached to the bump stopper attachment portion 16 and is shaped like, for example, a cylinder. For example, the bump stopper 17 is made of a resin material. The bump stopper 17 is a so-called shock absorber for reducing contact between the vehicle body and the suspension structure in a case in which the suspension coil 19 has a large amount of compression. In the present embodiment, the sides of the second cross member 22 are disposed to be overlapped on the suspension coils 19 in the bottom view of the vehicle. In the present embodiment, the bump stopper attachment portions 16 are also disposed while being overlapped on the sides of the second cross member 22. In Figure 3, the bump stopper 17 is indicated by a broken line.

The longitudinal reinforcing members 41 and 42 will be described below. As illustrated in Figure 2, the longitudinal reinforcing members 41 and 42 are members that extend in the longitudinal direction of the vehicle and connect an intermediate portion of the tail skirt inner panel 45 in the vehicle width direction and an intermediate part of the second cross member 22 in the vehicle width direction via the first cross member 21. In this configuration, the longitudinal reinforcing members 41 and 42 are each configured with two members. The first longitudinal reinforcing member 41 connects the intermediate portion of the second cross member 22 in the vehicle width direction and an intermediate portion of the first cross member 21 in the vehicle width direction. The front end of an undersurface 41a of the first longitudinal reinforcing member 41 is provided with a front lower flange 41b. The front lower flange 41b is joined to the undersurface part 22a of the second cross member 22 by spotwelding. A vertical flange (not illustrated) may be provided on the outer part of the front of the first longitudinal reinforcing member 41 in the vehicle width direction and joined to the rear wall part 22c of the second cross member 22. Furthermore, an outer lateral flange 41c is provided at the upper portion of the outer part of the first longitudinal reinforcing member 41 in the vehicle width direction. The outer lateral flange 41c is joined to the undersurface of the floor panel 1 by spotwelding.

Furthermore, the rear of the first longitudinal reinforcing member 41 is provided with a rear lower flange 41d and an outer vertical flange 41e. The rear lower flange 41d protrudes toward the rear of the vehicle from the rear end of the undersurface 41a of the first longitudinal reinforcing member 41 and is joined to the undersurface part 21a of the first cross member 21 by spotwelding. The outer vertical flange 41e protrudes to the outside in the vehicle width direction from the rear end of the side wall of the first longitudinal reinforcing member 41 and is joined to the front wall part 21b of the first cross member 21 by spotwelding.

The second longitudinal reinforcing member 42 connects the intermediate portion of the first cross member 21 in the vehicle width direction and the intermediate portion of the tail skirt inner panel 45 in the vehicle width direction. The front end of an undersurface 42a of the second longitudinal reinforcing member 42 is provided with the front lower flange 41b like the first longitudinal reinforcing member 41. The front lower flange 41b is joined to the undersurface part 21a of the first cross member 21 by spotwelding. Furthermore, the front of the second longitudinal reinforcing member 42 may be provided with a vertical flange like the first longitudinal reinforcing member 41. Furthermore, the upper part of the second longitudinal reinforcing member 42 may be provided with an outer lateral flange.

Furthermore, the rear of the second longitudinal reinforcing member 42 is provided with the rear lower flange 41d and an outer vertical flange 42e. The rear lower flange 41d protrudes toward the upper side of the vehicle from the rear end of the undersurface 42a of the second longitudinal reinforcing member 42 and is joined to the front of the vertical wall part 45a of the tail skirt inner panel 45 by spotwelding. Furthermore, a vertical flange may be provided at the rear of the second longitudinal reinforcing member 42, and an outer lateral flange may be provided at the upper part of the second longitudinal reinforcing member 42.

In the present embodiment, as illustrated in Figure 6, the rear end of the rear lower flange 41d of the first longitudinal reinforcing member 41 and the front end of the front lower flange 41b of the second longitudinal reinforcing member 42 are preferably spaced in the longitudinal direction of the vehicle. Furthermore, the rear lower flange 41d of the first longitudinal reinforcing member 41 and the front lower flange 41b of the second longitudinal reinforcing member 42 may be each joined to the undersurface part 21a of the first cross member 21 via the inside lateral flange 25e of the lateral rod balancer 25 such that the three flanges are stacked on the undersurface part 21a.

The first longitudinal reinforcing member 41 and the second longitudinal reinforcing member 42 are provided to connect the second cross member 22, the first cross member 21, and the tail skirt inner panel 45, the second cross member 22 being disposed next to (stacked on) the bump stopper attachment portion 16 and the suspension coil 19 in the vertical direction of the vehicle while the bump stopper attachment portion 16 and the suspension coil 19 support a load applied in the vertical direction of the vehicle. Thus, the structure can be obtained with high strength against a collision from the rear.

Furthermore, in the present embodiment, the longitudinal reinforcing members 41 and 42 are disposed between the first cross member 21 and the lateral rod balancer 25 (tilt member) in the vehicle width direction as illustrated in Figures 2 to 4. In this example, the first longitudinal reinforcing member 41 and the second longitudinal reinforcing member 42 are disposed in the foregoing layout. Thus, the longitudinal reinforcing members 41 and 42 serving as a partition can reduce the transmission of a load from a lateral rod (not illustrated) to the rear mounting bracket 30 in the vehicle width direction. Furthermore, the longitudinal reinforcing members 41 and 42 are disposed around the center in the vehicle width direction, so that the structure can be obtained with higher strength against a collision from the rear.

Furthermore, in the present embodiment, the first cross member 21, the brace 27, and the lateral rod balancer 25 form a triangular structure, so that strength against a collision from the rear can be further improved in the rear of the vehicle.

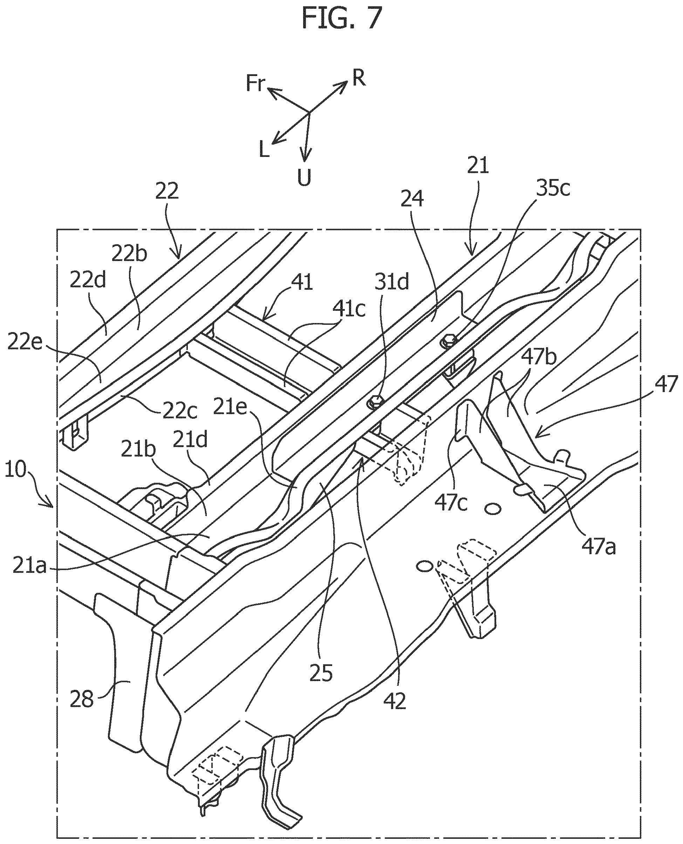

Furthermore, in the present embodiment, the tail skirt inner panel 45 is provided with a balancer member 47 as illustrated in Figure 7. The balancer member 47 is joined to the upper portion of the joining surface portion 45c and the rear surface of the vertical wall part 45a. The balancer member 47 of this example includes a flat surface portion 47a extending in the longitudinal direction of the vehicle and outer wall portions 47b joined to the vertical wall part 45a. The flat surface portion 47a extends in the longitudinal direction of the vehicle to the rear end of the bottom part 45b including the joining surface portion 45c of the tail skirt inner panel 45. The flat surface portion 47a of the balancer member 47 is disposed while being overlapped on the rear mounting bracket 30 in plan view.

The front of the flat surface portion 47a has a through hole and is fastened to the central joining portion 31d of the rear mounting bracket 30 through the joining surface portion 45c of the tail skirt inner panel 45. In this example, the flat surface portion 47a, the central joining portion 31d, and the joining surface portion 45c are fastened together while the three portions are stacked. Furthermore, the rear of the flat surface portion 47a is joined to the bottom part 45b by spotwelding.

As illustrated in Figure 7, the outer wall portions 47b are side walls extending to the vertical wall part 45a from the fronts of outer portions on both sides of the flat surface portion 47a in the vehicle width direction. The front ends of the outer wall portions 47b extend in the vertical direction of the vehicle. The front end is provided with a vertical flange 47c protruding outward in the vehicle width direction. The vertical flange 47c is joined to the vertical wall part 45a by spotwelding.

By providing the balancer member 47, the tail skirt inner panel 45 is difficult to bend in the event of a collision from the rear, so that the structure can be obtained with higher strength.

Furthermore, in the present embodiment, the vehicle-width-direction reinforcing member 24 is provided between the front wall part 21b and the rear wall part 21c of the first cross member 21 as illustrated in Figures 6 and 7. The vehicle-width-direction reinforcing member 24 extends in the vehicle width direction, has a U-shape opened to the upper side of the vehicle in cross section, and corresponds to the shape of a cross section of the first cross member 21. The vehicle-width-direction reinforcing member 24 is joined to the lateral rod balancer 25, the first longitudinal reinforcing member 41, the second longitudinal reinforcing member 42, and the rear mounting bracket 30 via the first cross member 21.

The provision of the vehicle-width-direction reinforcing member 24 can further strengthen a joining state of the first longitudinal reinforcing member 41, the second longitudinal reinforcing member 42, the lateral rod balancer 25, and the rear mounting bracket 30, thereby improving rigidity and strength in the rear of the vehicle. Furthermore, the joining portions of the first cross member 21 with the first longitudinal reinforcing member 41, the second longitudinal reinforcing member 42, the lateral rod balancer 25, and the rear mounting bracket 30 are reinforced, thereby effectively reducing deformations (e.g., bending deformations) of the first cross member 21. Consequently, the structure can be obtained with higher strength against a collision from the rear.

The description of the present embodiment is merely an example for describing the present invention and does not limit the invention set forth in the claims. Furthermore, the configurations of the present invention are not limited to the foregoing embodiment and can be modified in various ways within the technical scope of the claims.

For example, in the present embodiment, the bump stopper is cylindrical. The configuration is not limited thereto. If a shock absorbing function is provided, a through hole penetrating in the vehicle width direction may be formed as, for example, a hexagonal prism extending in the vehicle width direction.

### [Reference Signs List]

- 1: Floor panel
- 2: Motor unit
- 3: Support arm
- 5: Rear wheel
- 6: Axle shaft
- 10: Side member
- 11: Undersurface
- 11a: Tilting portion
- 12: Inner surface
- 15: Reinforcing member
- 16: Bump stopper attachment portion
- 17: Bump stopper
- 18: Suspension coil
- 21: First cross member
- 21a: Undersurface part
- 21b: Front wall part
- 21c: Rear wall part
- 21d: Front flange
- 21e: Rear flange
- 21f: Outer lateral flange
- 22: Second cross member
- 22a: Undersurface part
- 22b: Front wall part
- 22c: Rear wall part
- 22d: Front flange
- 22e: Rear flange
- 22f: Outer lateral flange
- 23: Third cross member
- 24: Vehicle-width-direction reinforcing member
- 25: Lateral rod balancer (tilt member)
- 25a: Undersurface part
- 25b: Front wall part
- 25c: Rear wall part
- 25d: Front flange
- 25e: Inside lateral flange
- 27: Brace
- 28: Vertical member
- 30: Rear mounting bracket
- 31: Top surface part
- 31a: Upper face
- 31b: Tilted surface
- 31c: Lower face
- 31d: Central joining portion
- 32: Left side wall part
- 32a: Through hole
- 33: Left protruding part
- 33a: Joining surface portion
- 33b: Flat surface portion
- 33c: Left joining portion
- 33d: Front wall
- 33e: Rear wall
- 33f: Flange
- 33g: Flange
- 34: Right side wall part
- 34a: Through hole
- 35: Right protruding part
- 35b: Flat surface portion
- 35c: Right joining portion
- 38: Front mounting bracket
- 41: First longitudinal reinforcing member
- 41a: Undersurface
- 41b: Front lower flange
- 41c: Outer lateral flange
- 41d: Rear lower flange
- 41e: Outer vertical flange
- 42: Second longitudinal reinforcing member
- 41a: Undersurface
- 42b: Front lower flange
- 42d: Rear lower flange
- 42e: Outer vertical flange
- 45: Tail skirt inner panel (inner panel)
- 45a: Vertical wall part
- 45b: Bottom part
- 45c: Joining surface portion
- 47: Balancer member
- 47a: Flat surface portion
- 47b: Outer wall portion
- 47c: Vertical flange

## Claims

1. A vehicle rear structure including:
side members that are disposed on both sides in a vehicle width direction and extend in a longitudinal direction of a vehicle;
a first cross member that extends in the vehicle width direction so as to connect the side members on both sides;
a motor unit disposed between the side members on both sides in the vehicle width direction, on a vehicle front side of the cross member;
a mounting bracket attached to a vehicle body while supporting the motor unit;
a tilt member that is joined to an intermediate portion of the first cross member in the vehicle width direction and tilts toward a lower side of the vehicle while extending outward in the vehicle width direction; and
an inner panel that is located on a rear end of the vehicle body and extends in the vehicle width direction, **characterized in that**
the mounting bracket extends in the longitudinal direction of the vehicle, a front of the mounting bracket is joined to an intermediate portion of the first cross member in the vehicle width direction, a rear end of the mounting bracket is joined to the inner panel, and
a first joining portion for joining the first cross member and the tilt member and a second joining portion for joining the first cross member and the mounting bracket are disposed next to each other in the vehicle width direction.

2. The vehicle rear structure according to claim 1, wherein
the vehicle rear structure comprises a second cross member that is disposed at a distance from the first cross member on a vehicle front side and extends in the vehicle width direction so as to connect the side members on both sides,
a side of the second cross member is disposed while being overlapped on a suspension coil in a bottom view of the vehicle, the suspension coil being connected to a suspension structure, and
the vehicle rear structure comprises a longitudinal reinforcing member that extends in the longitudinal direction of the vehicle so as to connect an intermediate portion of the inner panel in the vehicle width direction and the second cross member via the first cross member.

3. The vehicle rear structure according to claim 2, wherein the longitudinal reinforcing member is disposed between the first cross member and the tilt member in the vehicle width direction.

4. The vehicle rear structure according to claim 1 or 2, wherein a brace extending to a lower side of the vehicle is joined to an outer part of the first cross member in the vehicle width direction, and the brace, the tilt member, and the first cross member form a triangular structure.

5. The vehicle rear structure according to claim 1 or 2, wherein
the inner panel has a joining surface portion for joining the mounting bracket, the joining surface portion extending in the longitudinal direction of the vehicle,
a front end of the joining surface portion is provided with a vertical wall surface extendable to an upper side of the vehicle, and
the inner panel is provided with a balancer member joined to an upper portion of the joining surface portion and a rear of the vertical wall surface portion, the balancer member being disposed while being overlapped on the mounting bracket in plan view.

6. The vehicle rear structure according to claim 1 or 2, wherein
a vehicle-width-direction reinforcing member is provided between a front and a rear of the first cross member,
the vehicle-width-direction reinforcing member has a U-shape opened to an upper side of the vehicle in cross section, and
the vehicle-width-direction reinforcing member is joined to the tilt member, the longitudinal reinforcing member, and the rear mounting bracket via the first cross member.
